# EUROPEAN PATENT SPECIFICATION

(11) **EP 4 279 752 B1**
(45) Date of publication and mention of the grant of the patent: **20.11.2024**
(21) Application number: 23170447.9
(22) Date of filing: 27.04.2023
(51) Int. Cl.: F16B 21/07, G06K 19/07, G06K 19/073

(54) **RFID VERIFICATION CAP**
RFID-VERIFIZIERUNGSKAPPE
CAPUCHON DE VÉRIFICATION RFID

(30) Priority: 19.05.2022 EP 22174445
(43) Date of publication of application: 22.11.2023
(73) Proprietor: Illinois Tool Works Inc., Glenview IL 60025 (US)
(72) Inventor: RIBES MARTÍ, Òscar, Glenview, 60025 (US); ELLIS, Richard, Glenview, 60025 (US)
(74) Representative: HGF

(56) References cited:
- EP-A1- 2 977 624
- DE-A1- 102020 107 688
- GB-A- 2 542 833
- US-B1- 9 483 674

## Description

The invention relates generally to a verification cap. In particular, the invention relates to a verification cap, for verifying correct installation of a fastening clip into a support structure. Even more particular, the present invention relates to a verification cap utilising RFID for remote verification of correct installation of a fastening clip, e.g. with a luggage ring, into a support structure. The invention further relates to a verification cap assembly including a verification cap and a fastening clip.

### Background

In the automotive industry, fastening clips are used to mount components, structures or panels to the frame of a vehicle. One particular type of fastening clip for use in a storage compartment of a vehicle, is embedded to a base panel or a side panel of the storage compartment. Such a fastening clip is located at a fixed point, or more often, multiple fixed points, of the storage compartment. The fastening clip(s) may comprise a luggage ring onto which loose objects such as shopping bags or other items are attached or strapped, so that they do not move around the storage compartment when the vehicle is in motion. Other types of fastening clips are also known within the automotive industry.

Typically, in an automotive manufacturing process, a number of fastening clips are assembled into the storage compartment using fasteners that are attached to the structure or panel through an aperture in the structure or panel. The correct installation of the clips can be a very time-consuming process, because, once the fastening clips and respective luggage rings are installed, the vehicle undergoes a thorough inspection to check the quality and completeness of the installed fittings. In order to provide a desired quality standard, it has to be verified that all of the fastening clips are installed properly (i.e. the fasteners are firmly in place). For example, the torque data recorded by electronic screwdrivers when installing the screwed luggage ring may be used to verify correct installation. From this, it is understandable that the need for a specialist tool to ensure correct installation of a luggage ring can be rather cumbersome, especially, when access to the vehicle location is difficult. Also, a great number of fastening clips is typically installed in vehicles, thus, the physical process for checking the quality of each one of the fittings can be very time-consuming and tedious. The process for quality checking is especially tedious when the fastening clips are placed in hard-to-reach locations. Often, fastening clips are placed within these hard-to-reach locations in order to prevent any objects attached to the fastening clips from moving around during transport. For example, some storage compartments of vehicles have fastening clips connected to luggage rings placed at a location close to the rear passenger seats. It is particularly important to ensure that the fastening clips are properly installed in order to avoid loosening through vibrations when the vehicle is running.

Consequently, it would be desirable to provide a verification cap that can alleviate or mitigate one or more of the aforementioned problems. Particularly, it is an object of the invention to provide a verification cap that facilitates a quick and efficient way of verifying correct installation of a fastening clip to a support structure. More specifically, it is an object of the invention to provide a verification cap that can remotely verify, whether or not, a fastening clip has been correctly installed into a support structure.

The prior art document GB2542833 A shows a RFID module in a housing.

### Summary of the Invention

In accordance with the present invention there is provided a verification cap according to the appended claims.

According to an aspect of the present invention, there is provides a verification cap for verifying installation of a fastening clip to a support structure, comprising:
a tubular base member, having an enclosing side wall defining an interior space between an open bottom end portion and an open top end portion, configured to retainingly receive at least a portion of the fastening clip during assembly, and
a cover member, hingeably connected to said base member and movable between a closed position, lockingly engaged with said top end portion of said side wall, and an open position, disengaged from said top end portion of said side wall, and
a RFID system, operably coupled to an inner surface of said cover member and configured to actuate/enable transmission of a verification signal only when said cover member is in said closed position, lockingly engaged with said top end portion of said side wall, such that the fastening clip is in a predetermined position relative to said RFID system, during use.

This provides the advantage that an installer is able to quickly and remotely check, whether or not, any of the installed fastening clips have been installed in accordance with a predetermined quality standard (e.g. the clip is firmly coupled to the structure and the clip is correctly aligned with the panel surface). The RFID system (RFID tag) of any fastening clip not installed to the desired standard (e.g. not fully aligned or pushed through the panel aperture) will not be able to respond to an interrogating RFID reader and can thus be quickly identified and remedied. This is particularly beneficial as the verification signal is transmitted even if the fastener assembly is hidden from view, located internally, or placed in a hard to reach location.

Advantageously, said predetermined position is a contact engagement between said RFID system and a top surface of the fastening clip, when said cover member is in said closed position and lockingly engaged with said top end portion of said side wall.

Preferably, the fastening clip comprises an electrical conductor adapted to activate or enable said RFID system.

Advantageously, said RFID system comprises at least one deactivating open connection configured to form an activating closed connection with the electrical conductor of the fastening clip when said cover member is in said closed position and lockingly engaged with said top end portion of said side wall. This provides a simple and robust switch mechanism for the utilised RFID system (e.g. RFID tag) where the conducting surface of the "correctly" inserted clip provides an electrical conductor to "bridge" the disabling, open connection of the RFID system (e.g. RFID tag).

Advantageously, said cover member comprises a biasing member adapted to bias said RFID system into contact engagement with the fastening clip when said cover member is in said closed position and lockingly engaged with said top end portion of said side wall. Preferably, said biasing member is provided between said inner surface of said cover member and said RFID system. Even more preferably, said biasing member is made from a resilient material. Yet, even more preferably, said biasing member is made from a polymer. This provides the advantage that an enabling contact between the RFID system and the conducting surface of the fastener is ensured when the cap cover is closed and lockingly engaged, i.e. the biasing member (e.g. a resilient polymer foam material) provides a predetermined pressure between the contact surfaces of the engaging RFID system (i.e. open contacts) and the conducting (e.g. metal) fastener.

Advantageously, said RFID system comprises at least one RFID tag configured to transmit said verification signal when interrogated from an RFID reader.

Advantageously, said cover member further comprises at least one stop member projecting away from said cover member into said interior space, so as to define a predetermined restricted space for accommodating at least one component of the fastening clip between said bottom end portion and a distal end of said stop member when said cover member is in said closed position, during use.

This provides the additional advantage that the correct installation of the fastening clip to the panel or support structure can also be verified manually (i.e. during installation). The provision of at least one stop member projecting away from the cover member provides a restricted space of a predetermined size that accommodates at least one component of the fastening clip. When the cover member is in the closed position, the at least one component of the fastening clip is accommodated within the space, to provide verification that the fastening clip is properly installed. If, however, the fastener clip is not properly installed, the space does not provide sufficient room to accommodate the at least one component of the fastening clip, and therefore, the cover member is placed into an open position, disengaged from the top end part of the base member. The position of the cover member relative to the base member, in either a closed position or an open position, indicates whether or not, a fastening clip is fully installed to a support structure. Also, when the cover member is not closed correctly, there will not be sufficient contact between the RFID system and the conducting surface of the fastening clip, this the RFID system remains disabled and cannot react to an interrogating RFID reader. Therefore, the verification cap of the present invention can provide any one or all of a visual, tactile or remote signal indication on whether or not the fastening clip is correctly installed, removing the need for tedious and time-consuming inspection processes.

Preferably, said interior space is configured to retainingly receive a head portion of the fastening clip, during assembly. More preferably, said stop member is configured to contactingly engage with the at least one component when the at least one component is not entirely contained within said predetermined restricted space of said base member.

Advantageously, said base member comprises two opposing parallelly arranged pairs of teeth extending from respective ribs up towards said top end portion and adapted to retainingly couple with a head portion of the fastening clip. Preferably, said teeth comprise a latch portion configured to engage with the head portion of the fastening clip.

Advantageously, said cover member comprises a lock member projecting away from said cover member, and said base member comprises a respective catch member configured to lockingly engage with said lock member when said cover member is in said closed position.

### Brief Description of the Drawings

Embodiments of the invention are now described, by way of example only, hereinafter with reference to the accompanying drawings, in which:
- **Figure** 1: illustrates a perspective view of a verification cap (without the fastening clip) in a closed position (a) from the top and (b) from the bottom;
- **Figure** 2: illustrates (a) front view, (b) rear view, (c) left side view, (d) right side view, (e) top view and (f) bottom view of the verification cap (without the inserted fastening clip) shown in Figure 1;
- **Figure** 3: illustrates (a) a perspective view, (b) a side view and (c) a front view of a fastening clip and luggage ring assembled together;
- **Figure** 4: illustrates step-by-step the correct insertion of a fastening clip into the verification cap (not the coupling with the panel) (a) closed verification cap, (b) open verification cap, (c) moving fastening clip into the base member of the verification cap, (d) fastening clip retainingly inserted into the base member of the verification cap, and (e) closed verification cap assembly;
- **Figure** 5: illustrates (a) a transverse cross-section and (b) a longitudinal cross-section of a perspective view of the verification cap;
- **Figure** 6: illustrates a schematic perspective view of a cross sectioned verification cap assembly (a) with the cover open and the RFID system disabled, and (b) with the cover closed and the RFID system enabled through the fastening clip and responding to an interrogating RFID reader, and

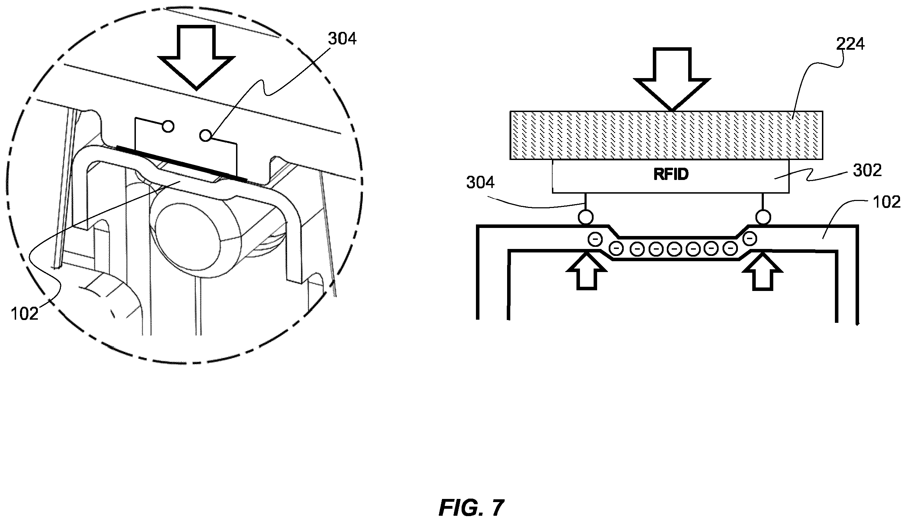

- **Figure** 7: illustrates (a) a schematic close up view of the RFID system and contactingly engaged fastening clip and (b) a schematic of the biasing member pressing the RFID system into engagement with the conducting surface of the fastening clip, so as to enabling the RFID system by closing the open connection of the RFID system.

### Detailed Description

Certain terminology is used in the following description for convenience only and is not limiting. The words 'right', `left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Furthermore, the terms "fastener", "fastening clip", "clip", as well as, the terms "verification cap" and "cap", are used interchangeably.

Like reference numerals are used to depict like features throughout.

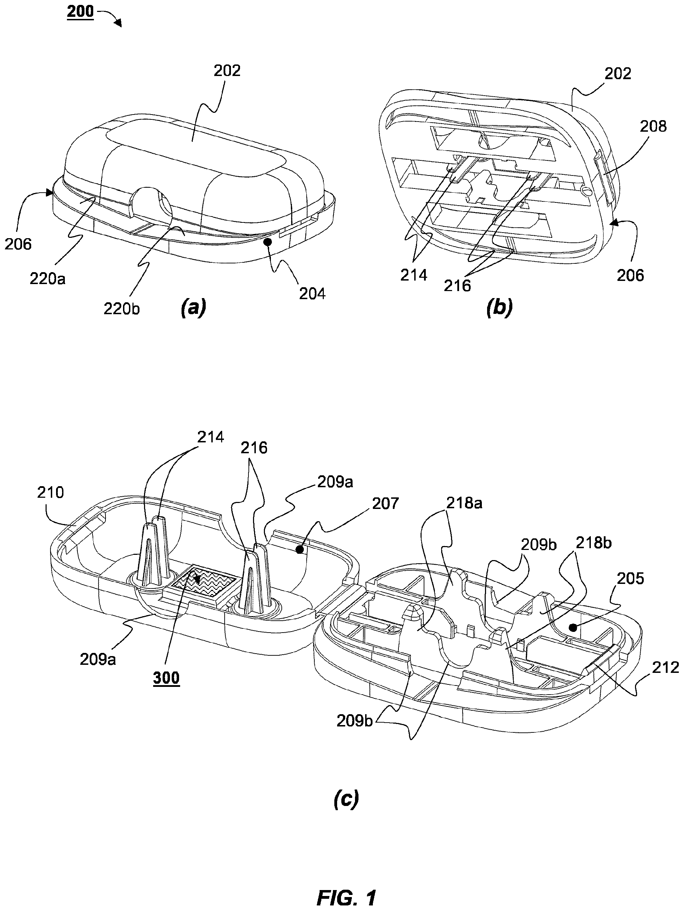

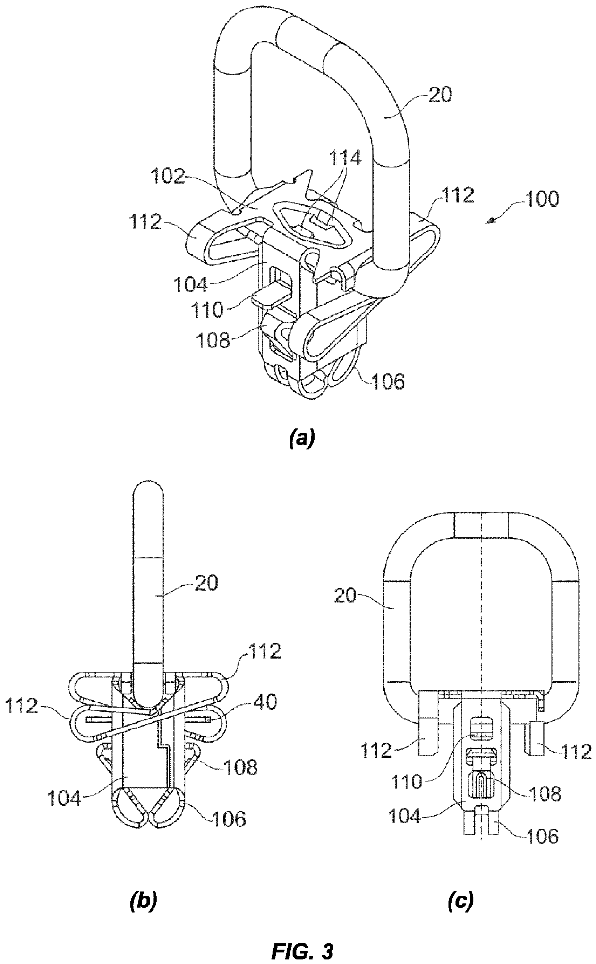

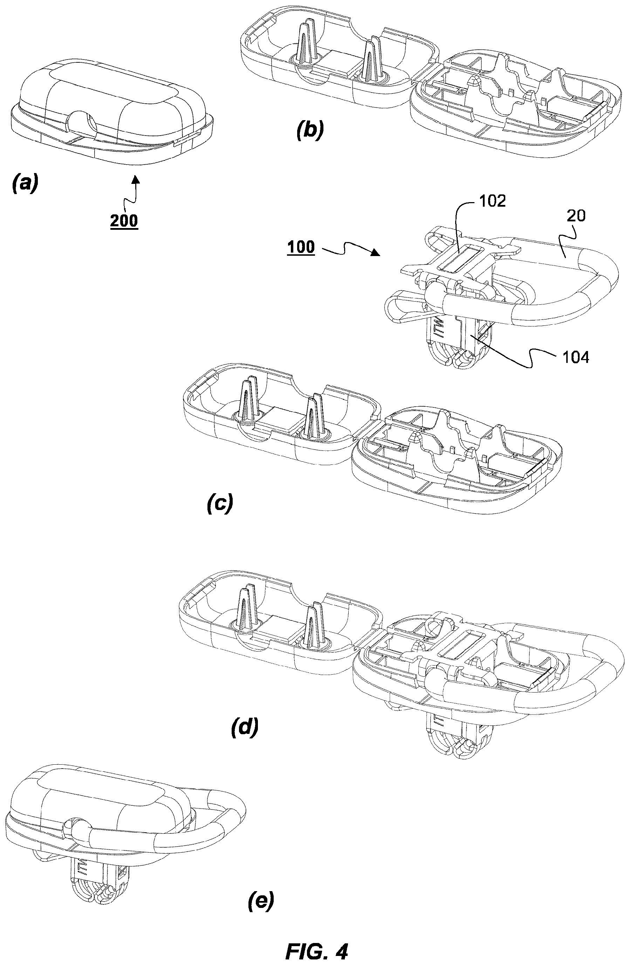

Referring now to Figure 1, there is shown a verification cap 200 for a luggage ring assembly without the luggage ring clip 100. Here, the verification cap 200 comprises an upper lid 202 and a lower base 204. The lid 202 is connected together with the base 204 by a hinge 208 which allows the lid 202 to pivot about the base 204 between open and closed position. The base 204 has an outer side wall 205 that defines an interior space of a predetermined depth. The side wall 205 is formed as a single part having two pairs of opposing wall portions. The enclosed space of the base 204 is substantially open at its top and bottom, i.e. the outer side wall 205 of the base 204 forms a tubular structure. In this particular example embodiment, the footprint formed by the side wall 205 is substantially square or rectangular. However, any other suitable footprint of the base 204 may be used, e.g. circular or polygonal. In addition, the base 204 comprises a skirt 206 extending away from the side wall 205 and that is particularly adapted to eliminate, or at least minimise, any gapping between the base 204 of the cap 200 and the vehicle panel (not shown, e.g. from a carpet in the trim). In addition, the skirt 206 includes mechanical stops 220a,b (see Figure 3 and Figure 4) adapted to prevent the luggage ring 20 from contacting the panel or trim (e.g. avoid rattling during movement). The stops 220a,b (e.g. in the form of a ramp feature extending laterally outward from a centre portion of the skirt 206) also allow for the luggage ring 20 to be positioned at an angle with respect to the panel surface, thus, making it easier for the user to grab and pivot the luggage ring 20, during use. In this particular example embodiment, the ramp features of the stops 220a,b are an integral part of the skirt 206, but may also be attached or incorporated retrospectively.

The lid 202 of the verification cap 200 is illustrated in Figures 1, 2, 4 and 5. The lid 202 is provided with an outer side wall 207 having a profile corresponding to the profile of the outer side wall 205 of the base 204. The outer side wall 207 of the lid 202 is formed as a single part having two pairs of opposing wall portions. The bottom end of the lid's 202 side wall 207 is open, having a square or rectangular profile when viewed from the bottom. The top end of the lid 202 is closed. The lid 202 and the base 204 are complimentary to each other so as to form an enclosure for the inserted fastening clip 100. Respective side walls 205, 205 of the verification cap 200, as well as, an interior rib portion of the base 204, are each provided with substantially semi-circular cut-outs (i.e. opening) 209a,b, so that when the lid 202 and base 204 come together into a closed position, a circular opening (or through hole) is formed for the luggage ring 20 when the fastening clip 100 is inserted into the base 204.

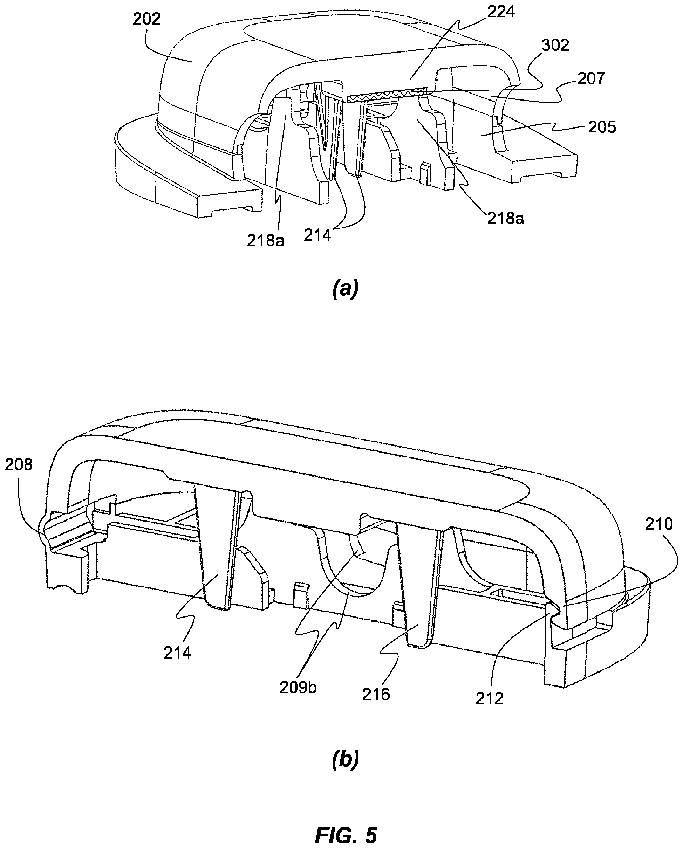

As particularly shown in Figure 1(c), projecting from a lower surface of the lid 202 are a first pair of verification tabs 214 and a second pair of verification tabs 216. The second pair of verification tabs 216 is spaced apart from the first pair of verification tabs 214 along the bottom surface of the lid 202. The verification tabs 214, 216 have a predetermined length adapted to contactingly engage with resilient arms 110 of the fastening clip 100 when not inserted fully or correctly into the base 204. Although two pairs of verification tabs 214, 216 are described in this specific example embodiment, other embodiments may include a different number of verification tabs, for example one, three, four, or more. Further, a hook 210 projects downwards from the lower surface of the lid's side wall 207. As best shown in Figure 5(b), the hook 210 is integrally formed with the outer side wall 207 of the lid 202. Correspondingly, the base 204 comprises a catch 212 (see Figure 5(b) at a location opposite to the hook 210 when the lid 202 is in a closed position relative to the base 204.

Referring to Figure 1(c), two opposing pairs of teeth 218 are parallelly arranged and extending upwards from respective rib members of the base 204. The distal ends of the teeth 218 are each provided with a latch configured to securingly engage with the head 102 of the fastening clip 100 when the fastening clip 100 is placed within the verification cap 200. The teeth 218 are made of substantially resilient material adapted to allow bending when the fastening clip is positioned into the base 204.

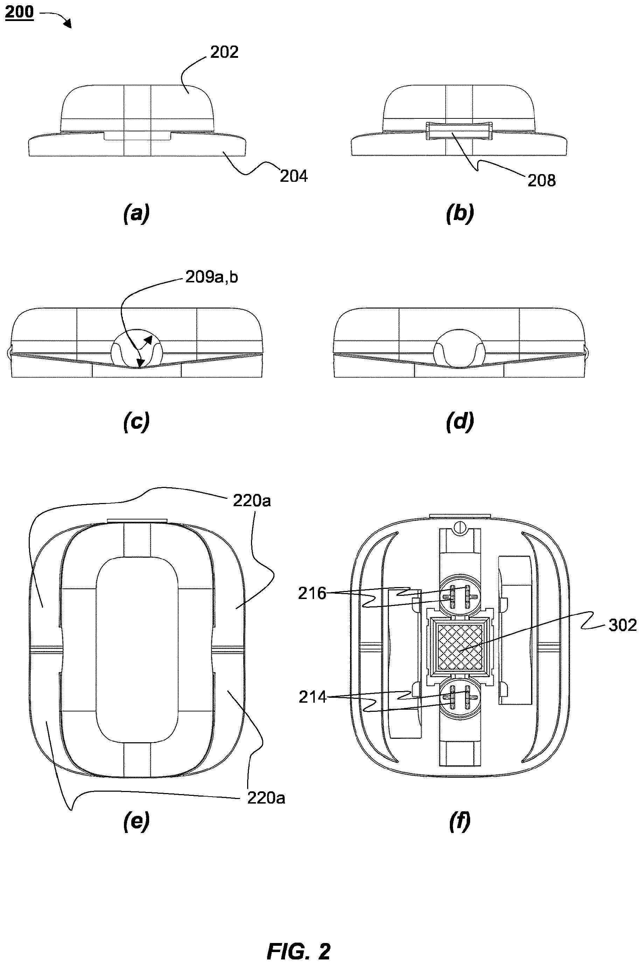

Referring now to Figures 3(a) to (c), a fastening clip 100 as used with this particular example embodiment of the verification cap 200, is illustrated with the luggage ring 20 in an upstanding position. The body 104 of the fastening clip 100 is integrally formed with a head 102. The head 102 has an opening on its top surface, on which are provided mechanical stops 114 on opposite sides. These mechanical stops 114 act as a guide to secure the luggage ring 20 to the fastening clip 100. The head 102 of the fastening clip 100 has holding arms 112 integral with and extending from opposite corners. The holding arms 112 are in contact with and partially surround the luggage ring 20 when the luggage ring 20 is secured to the fastening clip 100. This allows the luggage ring 20 to be maintained in a desired position by friction during use, such as in the upstanding position shown in Figure 2. The body 104 of the fastening clip 100 is provided with openings on the sides. The openings provide access for parts of the fastening clip 100 to extend through from the inside of the body 104 through to the outside. More specifically, the fastening clip 100 is provided with a pair of oppositely protruding resilient arms 110 extending through a respective pair of opposite upper openings in the body 104. The resilient arms 110 laterally protrude in a direction parallel to an upper surface of the head 102. The fastening clip 100 is also provided with a pair of oppositely protruding shoulders 108 extending through a respective pair of opposite lower openings in the body 104. The resilient arm 110 and shoulder 108 on each side are integrally formed, as best shown in Figure 3. At an end away from the head 102, the fastening clip 100 is provided with legs 106 for inserting into a panel structure, in order to secure the fastening clip 100 to the support structure.

Figures 4(a) to (e) illustrate a step-by-step series how the fastening clip 100 is retainingly coupled with the verification cap 200. In particular, the lid 202 is opened and the fastening clip 100 is inserted from the top into respective semi-circular cut-outs 209a,b of the base 204, so as to retainingly engage with the latch portions of the opposing pairs of teeth 218a,b. When the head portion 102 of the fastening clip 100 is fully inserted and coupled within the base portion 204, the lid 202 is moved into its closed position and lockingly engaged with the base portion via respective hook 210 and catch 212. Once assembled, the assembly of the verification cap 200 and fastening clip 100 can be mounted to the vehicle structure.

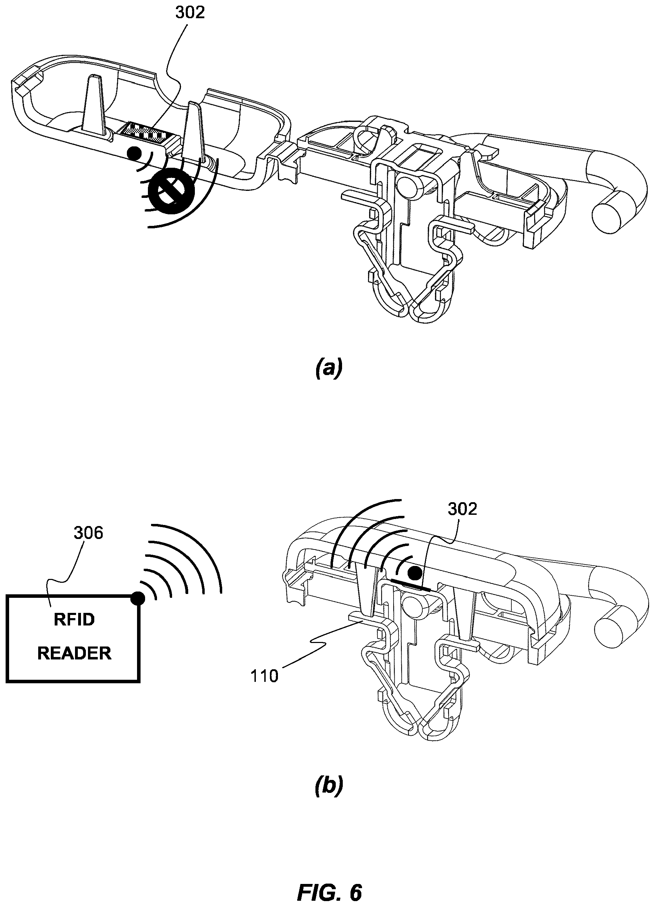

Referring now particularly to Figures 5 and 6, the verification cap 200 of the present invention is further provided with a Radio-Frequency-IDentification (RFID) system 300 operably coupleable between the verification cap 200 and the inserted fastening clip 100. In this particular embodiment of the invention, the lid 202 of the verification cap 200 comprises an RFID base member 224 protruding from the lower (i.e. inner) surface of the lid 202 into the interior space formed by the lid 202 and the base 204 when closed. Preferably, the RFID base member 224 is provided in a central region of the lid 202 between the two spaced apart pairs of verification tabs 214, 216. A RFID integrated circuit (IC) 302 is attached to the lower surface of the RFID base member 224 so that the RFID IC operating surface if facing downwards when the lid 202 is in the closed position (i.e. into the interior space of the verification cap 200). The RFID IC 302 is configured to include a circuit element or portion 304 configured to function as a switch, i.e. the circuit element or portion 304 is configured to render the RFID IC 302 inoperative until it is activated. In the example of the present invention, the circuit element or portion 304 of the RFID IC 302 is activated by bridging two open contacts with a conductive material, such as is provided by the metal head portion 102 of the fastening clip 100. However, it is understood by the person skilled in the art that any other suitable "activation" of the inactive circuit element or portion 304 may be used within the scope of the invention. For example, an open contact switch element / mechanism may be incorporated into the RFID IC 302 configured to only "switch on" when the RFID IC 302 contact surface is pressed onto the head 102 of the fastening clip 100 at a predetermined pressure (i.e. bias between the RFID IC 302 and the fastening clip 100), and "switch off' as soon as the circuit element or portion 304 is moved out of contact engagement with the fastening clip 100. Alternatively, the switch element provided with the RFIC IC 302 may be an optical switch configured to switch activation states depending on the position of the lid 202.

Further, in this particular example embodiment, the RFID base member 224 is provided by a resilient foam material attached to the lower wall of the lid 202 and adapted to provide a bias between the RFID IC 302 and the conducting surface area of the fastening clip 100 when the verification cap 200 has received the fastening clip 100 and is in the closed position. The thickness of the RFID base member 224 is such that the contact area of the RFID IC 302 is suitably and operably engaged with the conducting surface of the fastening clip 100. It is understood by the person skilled in the art, that the RFID base member 224 can be provided by any suitable protrusion configured to operably "house" the RFID IC 302. For example, the RFID base member 224 may be an integral protrusion of the upper lid 202 wall, either formed during moulding or press formed retrospectively. Further, an additional resilient layer (not shown) may be provided on the lower surface of the integral protrusion of the RFID base member 224 before the RFID IC 302 is attached or mounted. This resilient layer is configured to provide a predetermined bias between the RFID IC 302 and the conducting contact area of the fastening clip 100 suitable to activate the RFID IC 302 when the fastening clip 100 is correctly mounted within the verification cap 200 and to the vehicle panel or structure, and the lid 202 is in the closed position. The biasing force (or contact force) between the RFID IC 302 and the conducting area of the fastening clip 100 may be changed or altered (in case different RFIC IC's 302 are used with a particular verification cap 200) using different resilient material (i.e. different polymer foams or rubbers or other elastic polymers) and/or a different thickness. In the same manner, in case a resilient layer is attached to an integral RFID base member 224 (i.e. integral to the lid 202), the thickness and/or material of the resilient layer may be changed or altered to provide a desired bias between the RFID IC 302 and the conducting surface of the fastening clip 100.

However, it is understood by the person skilled in the art that the bias between the RFID IC and the head 102 of the fastening clip 100 may be provided by any other suitable means, i.e. other than a resilient layer or foam member. For example, one or more spring elements (incorporated with the RFID base member 224) may be used to provide a predetermined bias between the RFID IC 302 and the fastening clip 100 when the verification clip 200 is closed and fastened to the vehicle structure.

Alternatively, the RFID IC 302 may be simple attached or mounted to an integrally formed RFID base member 224 (i.e. integrally formed from the lid 202) without any biasing means, wherein the RFID base member 224 has a thickness that is suitable to position the RFID IC 302 and circuit element or portion 304 into an activating engagement with the fastening clip 100. For example, a maximum distance (i.e. gap) between the "engaged" RFID IC 302 and head 102 of the fastening clip 100 of less than ca. 100 µm (micrometre) may still be sufficient to allow a conducting "bridge" of the circuit element or portion 304 and "switch on" the RFID system 300, wherein the performance of the RFIC system 300 will drop sharply when the distance or gap is greater than ca. 100 µm.

Referring now particularly to Figures 6(a), (b) and (c), in use, the verification cap 200 is opened and the fastening clip 100 is positioned into the semi-circular cut-outs 209a,b, latched onto the teeth 218a,b of the base 204 and mounted to the panel or other vehicle structure. Only if the fastening clip 100 has been correctly inserted into the verification cap 100 and/or the vehicle structure 200, will it be possible to close the lid 202 of the verification cap 200. In case the fastening clip 100 is not fully inserted into the base 204 and/or clipped into the panel or vehicle structure, the verification tabs will contactingly engage with the resilient arms 110 of the fastening clip 100, preventing the lid 202 to lock into the closed position. An incomplete assembly and insertion of the fastener assembly will also prevent the RFID system 300 from being activated, because the gap between the RFID IC 302 and the head 102 of the fastening clip will prevent a suitable contact engagement to conducingly bridge the circuit member or portion 304.

When the fastening clip 100 is inserted into the verification cap 200 and the lid 202 is closed and locked with the base 204, the RFID IC 302 is suitably pressed into engagement with the head 102 of the fastening clip 100 and therefore activates the RFID system 300, i.e. switches the RFID system 300 from an inoperable state into an operable state. When the RFID system 300 is in the operable state, a RFID reader 306 can interrogate the RFID IC 302 and "read" any information provided by the RFID IC 302. The simple fact that the RFID system 300 of a particular fastener assembly (i.e. verification cap 200 and inserted fastening clip 100) is in an operable state when installed to the vehicle structure or panel, verifies to the user that the fastener assembly is installed correctly. Each one of a plurality of verification caps 200 may be provided with a unique ID (i.e. information stored on the RFID IC 302) allowing the user to inspect the correct installation of individual fastening clips more efficiently. In particular, the user is able to verify correct installation from a remote location using a suitable RFID reader 306.

It will be appreciated by persons skilled in the art that the above detailed examples have been described by way of example only and not in any limitative sense, and that various alterations and modifications are possible without departing from the scope of the invention as defined by the appended claims. Various modifications to the detailed examples described above are possible.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

### Reference list:

| | | | |
|---|---|---|---|
| 10 | Luggage ring assembly | 220a, b | Mechanical stops |
| 20 | Luggage ring | 224 | RFID base member |
| 30 | Panel | 300 | RFID system |
| 32 | Opening | 302 | RFID IC |
| 100 | Fastening clip | 304 | Circuit element |
| 102 | Head | 306 | RFID reader |
| 104 | Body | | |
| 106 | Leg | | |
| 108 | Shoulder (before deformation) | | |
| 110 | Resilient arm (before deformation) | | |
| 112 | Holding arm | | |
| 114 | Mechanical stop | | |
| 200 | Verification cap | | |
| 202 | Lid | | |
| 204 | Base | | |
| 205 | Outer side wall base | | |
| 206 | Skirt | | |
| 207 | Outer side wall lid | | |
| 208 | Hinge | | |
| 209a, b | Cut-outs | | |
| 210 | Hook | | |
| 212 | Catch | | |
| 214 | First verification tab | | |
| 216 | Second verification tab | | |
| 218a,b | Teeth | | |

## Claims

1. A verification cap for verifying installation of a fastening clip (100) to a support structure comprising:
a tubular base member (204), comprising an enclosing side wall (205) defining an interior space between an open bottom end portion and an open top end portion, configured to retainingly receive at least a portion of the fastening clip during assembly, and
a cover member (202), hingeably connected to said base member and movable between a closed position, lockingly engaged with said top end portion of said side wall, and an open position, disengaged from said top end portion of said side wall,
a RFID system (302), operably coupled to an inner surface of said cover member and configured to actuate transmission of a verification signal only when said cover member is in said closed position, lockingly engaged with said top end portion of said side wall such that the fastening clip is in a predetermined position relative to said RFID system, during use.

2. A verification cap according to claim 1, wherein said predetermined position is a contact engagement between said RFID system and a top surface of the fastening clip, when said cover member is in said closed position and lockingly engaged with said top end portion of said side wall.

3. A verification cap according to any one of the preceding claims, wherein the fastening clip comprises an electrical conductor adapted to activate said RFID system.

4. A verification cap according to claim 3, wherein said RFID system comprises at least one deactivating open connection configured to form an activating closed connection with the electrical conductor of the fastening clip when said cover member is in said closed position and lockingly engaged with said top end portion of said side wall.

5. A verification cap according to any one of the preceding claims, wherein said cover member comprises a biasing member adapted to bias said RFID system into contact engagement with the fastening clip when said cover member is in said closed position and lockingly engaged with said top end portion of said side wall.

6. A verification cap according to claim 5, wherein said biasing member is provided between said inner surface of said cover member and said RFID system.

7. A verification cap according to any one of claims 5 and 6, wherein said biasing member is made from a resilient material.

8. A verification cap according to claim 7, wherein said biasing member is made from a polymer.

9. A verification cap according to any one of the preceding claims, wherein said RFID system comprises at least one RFID tag configured to transmit said verification signal when interrogated from an RFID reader (306).

10. A verification cap according to any one of the preceding claims, wherein said cover member further comprises at least one stop member projecting away from said cover member into said interior space so as to define a predetermined restricted space for accommodating at least one component of the fastening clip between said bottom end portion and a distal end of said stop member when said cover member is in said closed position, during use.

11. A verification cap according to claim 10, wherein said interior space is configured to retainingly receive a head portion (102) of the fastening clip, during assembly

12. A verification cap according to any one of claims 10 and 11, wherein said stop member is configured to contactingly engage with the at least one component when the at least one component is not entirely contained within said predetermined restricted space of said base member.

13. A verification cap according to any one of the preceding claims, wherein said base member comprises two opposing parallelly arranged pairs of teeth (218a,b) extending from respective ribs up towards said top end portion and adapted to retainingly couple with a head portion of the fastening clip.

14. A verification cap according to claim 13, wherein said teeth comprise a latch portion configured to engage with the head portion of the fastening clip.

15. A verification cap according to any one of the preceding claims, wherein said cover member comprises a lock member projecting away from said cover member, and said base member comprises a respective catch member configured to lockingly engage with said lock member when said cover member is in said closed position.

## Patentansprüche

1. Verifizierungskappe zum Verifizieren der Montage einer Befestigungsklammer (100) an einer Stützstruktur,
aufweisend:
ein rohrförmiges Basiselement (204), das eine umschließende Seitenwand (205) aufweist, die einen Innenraum zwischen einem offenen unteren Endabschnitt und einem offenen oberen Endabschnitt definiert, der so konfiguriert ist, dass er während der Montage mindestens einen Abschnitt der Befestigungsklammer haltend aufnimmt, und
ein Abdeckelement (202),
das gelenkig mit dem Basiselement verbunden ist und zwischen einer Schließstellung, in Verriegelungseingriff mit dem oberen Endabschnitt der Seitenwand, und einer Öffnungsstellung, gelöst von dem oberen Endabschnitt der Seitenwand, bewegbar ist,
ein RFID-System (302),
das mit einer Innenfläche des Abdeckelements wirkverbunden ist und so konfiguriert ist, dass es eine Übertragung eines Verifizierungssignals nur dann auslöst, wenn sich das Abdeckelement in der Schließstellung, in Verriegelungseingriff mit dem oberen Endabschnitt der Seitenwand, befindet, sodass sich die Befestigungsklammer während des Gebrauchs in einer vorbestimmten Position in Bezug auf das RFID-System befindet.

2. Verifizierungskappe nach Anspruch 1, wobei die vorbestimmte Position ein Kontakteingriff zwischen dem RFID-System und einer oberen Fläche der Befestigungsklammer ist, wenn sich das Abdeckelement in der Schließstellung befindet und in Verriegelungseingriff mit dem oberen Endabschnitt der Seitenwand steht.

3. Verifizierungskappe nach einem der vorhergehenden Ansprüche, wobei die Befestigungsklammer einen elektrischen Leiter aufweist, der dafür ausgelegt ist, das RFID-System zu aktivieren.

4. Verifizierungskappe nach Anspruch 3, wobei das RFID-System mindestens eine deaktivierende offene Verbindung aufweist, die so konfiguriert ist, dass sie eine aktivierende geschlossene Verbindung mit dem elektrischen Leiter der Befestigungsklammer bildet, wenn sich das Abdeckelement in der Schließstellung befindet und in Verriegelungseingriff mit dem oberen Endabschnitt der Seitenwand steht.

5. Verifizierungskappe nach einem der vorhergehenden Ansprüche, wobei das Abdeckelement ein Vorspannelement aufweist, das dafür ausgelegt ist, das RFID-System vorspannend in Kontakteingriff mit der Befestigungsklammer zu bringen, wenn sich das Abdeckelement in der Schließstellung befindet und in Verriegelungseingriff mit dem oberen Endabschnitt der Seitenwand steht.

6. Verifizierungskappe nach Anspruch 5, wobei das Vorspannelement zwischen der Innenfläche des Abdeckelements und dem RFID-System vorgesehen ist.

7. Verifizierungskappe nach einem der Ansprüche 5 und 6, wobei das Vorspannelement aus einem elastischen Material hergestellt ist.

8. Verifizierungskappe nach Anspruch 7, wobei das Vorspannelement aus einem Polymer hergestellt ist.

9. Verifizierungskappe nach einem der vorhergehenden Ansprüche, wobei das RFID-System mindestens ein RFID-Tag aufweist, das so konfiguriert ist, dass es das Verifizierungssignal überträgt, wenn es von einem RFID-Lesegerät (306) abgefragt wird.

10. Verifizierungskappe nach einem der vorhergehenden Ansprüche, wobei das Abdeckelement ferner mindestens ein Anschlagelement aufweist, das so von dem Abdeckelement weg in den Innenraum vorsteht, dass es einen vorbestimmten begrenzten Raum zur Aufnahme mindestens einer Komponente der Befestigungsklammer zwischen dem unteren Endabschnitt und einem distalen Ende des Anschlagelements definiert, wenn sich das Abdeckelement während des Gebrauchs in der Schließstellung befindet.

11. Verifizierungskappe nach Anspruch 10, wobei der Innenraum so konfiguriert ist, dass er während der Montage einen Kopfabschnitt (102) der Befestigungsklammer haltend aufnimmt.

12. Verifizierungskappe nach einem der Ansprüche 10 und 11, wobei das Anschlagelement so konfiguriert ist, dass es mit der mindestens einen Komponente in Kontakteingriff kommt, wenn die mindestens eine Komponente nicht vollständig in dem vorbestimmten begrenzten Raum des Basiselements eingeschlossen ist.

13. Verifizierungskappe nach einem der vorhergehenden Ansprüche, wobei das Basiselement zwei gegenüberliegende, parallel angeordnete Paare von Zähnen (218a,b) aufweist, die sich von jeweiligen Rippen nach oben in Richtung des oberen Endabschnitts erstrecken und so ausgelegt sind, dass sie eine Halteverbindung mit einem Kopfabschnitt der Befestigungsklammer herstellen.

14. Verifizierungskappe nach Anspruch 13, wobei die Zähne einen Rastklinkenabschnitt aufweisen, der so konfiguriert ist, dass er mit dem Kopfabschnitt der Befestigungsklammer in Eingriff kommt.

15. Verifizierungskappe nach einem der vorhergehenden Ansprüche, wobei das Abdeckelement ein Sperrelement aufweist, das von dem Abdeckelement weg vorsteht, und das Basiselement ein jeweiliges Rastelement aufweist, das so konfiguriert ist, dass es in Verriegelungseingriff mit dem Sperrelement kommt, wenn sich das Abdeckelement in der Schließstellung befindet.

## Revendications

1. Bouchon de vérification pour vérifier l'installation d'une attache de fixation (100) sur une structure de support,
comprenant :
un élément de base tubulaire (204), comprenant une paroi latérale enveloppante (205) définissant un espace intérieur entre une portion d'extrémité inférieure ouverte et une portion d'extrémité supérieure ouverte, configurée pour recevoir de manière retenue au moins une portion de l'attache de fixation pendant l'assemblage, et
un élément de couvercle (202),
connecté de manière articulée audit élément de base et mobile entre une position fermée, en prise de manière verrouillable avec ladite portion d'extrémité supérieure de ladite paroi latérale, et une position ouverte, dégagée de la prise avec ladite portion d'extrémité supérieure de ladite paroi latérale,
un système RFID (302),
couplé de manière fonctionnelle à une surface interne dudit élément de couvercle et configuré pour actionner la transmission d'un signal de vérification uniquement lorsque ledit élément de couvercle est dans ladite position fermée, en prise de manière verrouillable avec ladite portion d'extrémité supérieure de ladite paroi latérale de sorte que l'attache de fixation est dans une position prédéterminée par rapport audit système RFID, pendant l'utilisation.

2. Bouchon de vérification selon la revendication 1, dans lequel ladite position prédéterminée est en prise par contact entre ledit système RFID et une surface supérieure de l'attache de fixation, lorsque ledit élément de couvercle est dans ladite position fermée et en prise de manière verrouillable avec ladite portion d'extrémité supérieure de ladite paroi latérale.

3. Bouchon de vérification selon l'une quelconque des revendications précédentes, dans lequel l'attache de fixation comprend un conducteur électrique adapté pour activer ledit système RFID.

4. Bouchon de vérification selon la revendication 3, dans lequel ledit système RFID comprend au moins une connexion ouverte de désactivation configurée pour former une connexion fermée d'activation avec le conducteur électrique de l'attache de fixation lorsque ledit élément de couvercle est dans ladite position fermée et en prise de manière verrouillable avec ladite portion d'extrémité supérieure de ladite paroi latérale.

5. Bouchon de vérification selon l'une quelconque des revendications précédentes, dans lequel ledit élément de couvercle comprend un élément de sollicitation adapté pour solliciter ledit système RFID en prise par contact avec l'attache de fixation lorsque ledit élément de couvercle est dans ladite position fermée et en prise de manière verrouillable avec ladite portion d'extrémité supérieure de ladite paroi latérale.

6. Bouchon de vérification selon la revendication 5, dans lequel ledit élément de sollicitation est fourni entre ladite surface interne dudit élément de couvercle et ledit système RFID.

7. Bouchon de vérification selon l'une quelconque des revendications 5 et 6, dans lequel ledit élément de sollicitation est composé d'un matériau élastique.

8. Bouchon de vérification selon la revendication 7, dans lequel ledit élément de sollicitation est composé d'un polymère.

9. Bouchon de vérification selon l'une quelconque des revendications précédentes, dans lequel ledit système RFID comprend au moins une étiquette RFID configurée pour transmettre ledit signal de vérification lorsqu'il est interrogé à partir d'un lecteur RFID (306).

10. Bouchon de vérification selon l'une quelconque des revendications précédentes, dans lequel ledit élément de couvercle comprend en outre au moins un élément d'arrêt faisant saillie depuis ledit élément de couvercle dans ledit espace intérieur de manière à définir un espace restreint prédéterminé pour loger au moins un composant de l'attache de fixation entre ladite portion d'extrémité inférieure et une extrémité distale dudit élément d'arrêt lorsque ledit élément de couvercle est dans ladite position fermée, pendant l'utilisation.

11. Bouchon de vérification selon la revendication 10, dans lequel ledit espace intérieur est configuré pour recevoir de manière retenue une portion de tête (102) de l'attache de fixation, pendant l'assemblage.

12. Bouchon de vérification selon l'une quelconque des revendications 10 et 11, dans lequel ledit élément d'arrêt est configuré pour venir en butée par contact avec l'au moins un composant lorsque l'au moins un composant n'est pas entièrement contenu au sein dudit espace restreint prédéterminé dudit élément de base.

13. Bouchon de vérification selon l'une quelconque des revendications précédentes, dans lequel ledit élément de base comprend deux paires de dents (218a, b) agencées parallèlement et opposées, s'étendant depuis des nervures respectives vers le haut en direction de ladite portion d'extrémité supérieure et adaptées pour s'accoupler de manière retenue avec une portion de tête de l'attache de fixation.

14. Bouchon de vérification selon la revendication 13, dans lequel lesdites dents comprennent une portion de loquet configurée pour venir en prise avec la portion de tête de l'attache de fixation.

15. Bouchon de vérification selon l'une quelconque des revendications précédentes, dans lequel ledit élément de couvercle comprend un élément de verrouillage faisant saillie à partir dudit élément de couvercle, et ledit élément de base comprend un élément d'accrochage respectif configuré pour venir en prise de manière verrouillable avec ledit élément de verrouillage lorsque ledit élément de couvercle est dans ladite position fermée.
